# EUROPEAN PATENT SPECIFICATION

(11) **EP 4 177 983 B1**
(45) Date of publication and mention of the grant of the patent: **25.02.2026**
(21) Application number: 22205185.6
(22) Date of filing: 03.11.2022
(51) Int. Cl.: H01M 4/04, H01M 4/134, H01M 4/62, H01M 10/052, H01M 10/0562, H01M 10/0565

(54) **ALL-SOLID-STATE BATTERY HAVING INTERMEDIATE LAYER INCLUDING METAL AND METAL NITRIDE AND MANUFACTURING METHOD THEREOF**
FESTKÖRPERBATTERIE MIT EINER ZWISCHENSCHICHT MIT METALL UND METALLNITRID SOWIE HERSTELLUNGSVERFAHREN DAFÜR
BATTERIE ENTIÈREMENT SOLIDE AYANT UNE COUCHE INTERMÉDIAIRE COMPRENANT DU MÉTAL ET DU NITRURE MÉTALLIQUE ET SON PROCÉDÉ DE FABRICATION

(30) Priority: 04.11.2021 KR 20210150483
(43) Date of publication of application: 10.05.2023
(73) Proprietor: Hyundai Motor Company, Seoul 06797 (KR); Kia Corporation, Seocho-gu Seoul 06797 (KR); Seoul National University R & DB Foundation, Seoul 08826 (KR)
(72) Inventor: IM, Ga Hyeon, 18280 Hwaseong-si, Gyeonggi-do (KR); KIM, Yun Sung, 18280 Hwaseong-si, Gyeonggi-do (KR); LEE, Sang Heon, 18280 Hwaseong-si, Gyeonggi-do (KR); CHOI, Seung Ho, 18280 Hwaseong-si, Gyeonggi-do (KR); OH, Ji Hoon, 06346 Seoul (KR); CHOI, Jang Wook, 06737 Seoul (KR)
(74) Representative: Isarpatent

(56) References cited:
- JP-A- 2018 129 159
- KR-A- 20210 071 023
- US-B2- 10 256 448
- N.N.: "A basic guide to particle characterization", 1 January 2015 (2015-01-01), XP093118075, Retrieved from the Internet <URL:https://www.cif.iastate.edu/sites/default/files/uploads/Other_Inst/Particle%20Size/Particle%20Characterization%20Guide.pdf> [retrieved on 20240111]

## Description

### TECHNICAL FIELD

The present disclosure relates to an all-solid-state battery having an intermediate layer including a metal and a metal nitride, and a method for manufacturing the same.

### BACKGROUND

An all-solid-state battery is a three-layer laminate including: a positive electrode layer joined to a positive electrode current collector; a negative electrode layer joined to a negative electrode current collector; and a solid electrolyte layer interposed between the positive electrode layer and the negative electrode layer. In general, the negative electrode layer of the all-solid-state battery includes an active material, such as graphite or silicon, and a solid electrolyte. The solid electrolyte is involved in the movement of lithium ions in the negative electrode layer. However, the solid electrolyte has a greater specific gravity than an electrolyte of a lithium ion battery, and due to the presence thereof, the proportion of the active material in the negative electrode layer is reduced, so that the actual energy density of the all-solid-state battery is less than that of the lithium ion battery.

In recent years, many studies have been conducted on an anodeless all-solid-state battery which is free of a negative electrode and in which lithium ions moving toward the negative electrode current collector are deposited directly on the negative electrode current collector during charging. However, a physical gap between the negative electrode current collector and the solid electrolyte layer creates a non-uniform flow of electrons, and thus lithium is locally deposited. Accordingly, an intermediate layer may be introduced to fill the gap between the negative electrode current collector and the solid electrolyte layer and induce uniform lithium deposition. Therefore, the intermediate layer should be compatible with lithium metal while allowing lithium ions to move uniformly. Relevant documents in this context are KR20210071023, US10256448 and JP2018129159.

### SUMMARY

In preferred aspects, provided are an all-solid-state battery in which lithium is uniformly deposited on a negative electrode current collector during charging and a method of preparing the same.

A term "all-solid state battery" as used herein refers to a rechargeable secondary battery that includes an electrolyte in a solid state, e.g., gel or polymer (cured), which may include an ionomer and other electrolytic components for transferring ions between the electrodes of the battery.

Objects of the present disclosure are not limited to the above-mentioned object. Objects of the present disclosure will become more apparent from the following description, and will be realized by means described in the claims and combinations thereof.

According to the present invention, provided is an all-solid-state battery, as defined in claim 1, comprising: a negative electrode current collector; an intermediate layer disposed on the negative electrode current collector; a solid electrolyte layer disposed on the intermediate layer; a positive electrode active material layer disposed on the solid electrolyte layer; and a positive electrode current collector disposed on the positive electrode active material layer, wherein the intermediate layer comprises a metal and a metal nitride,wherein a mass ratio of the metal to the metal nitride is about 1:9 to 5:5, wherein the metal electrochemically reacts with lithium ions that have moved from the positive electrode active material layer to the intermediate layer through the solid electrolyte layer during charging of the all-solid-state battery, and wherein the metal nitride is a lithium ion transport medium.

The metal may include one or more selected from the group consisting of silver (Ag), zinc (Zn), magnesium (Mg), bismuth (Bi), and tin (Sn).

The metal nitride may include a nitrogen atom having an unshared electron pair.

The metal nitride may include one or more selected from the group consisting of titanium nitride (TiN), aluminum nitride (AlN), cobalt (II) nitride (Co₃N₂), magnesium nitride (Mg₃N₂), silicon nitride (Si₃N₄), zinc nitride (Zn₃N₂), niobium nitride (NbN), copper (I) nitride (Cu₃N), and tin nitride (SnN).

The ratio (D₁/D₂) of the D50 particle size (D₁) of the metal nitride to the D50 particle size (D₂) of the metal may be about 0.2 to 0.5.

The D50 particle size of the metal may be about 30 nm to 1,000 nm.

The D50 particle size of the metal nitride may be about 10 nm to 200 nm.

The intermediate layer may include: an amount of about 90 wt% to 99 wt% of the metal and the metal nitride; and an amount of about 1 wt% to 10 wt% of a binder, wt% are based on the total weight of the intermediate layer.

The intermediate layer may have a thickness of about 0.5 µm to 20 µm.

The all-solid-state battery may further include a lithium layer positioned between the negative electrode current collector and the intermediate layer, and the lithium layer may include one or more selected from the group consisting of lithium, an alloy of the metal and lithium, and combinations thereof.

The negative electrode current collector may include one or more selected from the group consisting of nickel, stainless steel, titanium, cobalt, and iron.

The solid electrolyte layer may include one or more selected from the group consisting of an oxide-based solid electrolyte, a sulfide-based solid electrolyte, and a polymer electrolyte.

The positive electrode active material layer may include a positive electrode active material and a solid electrolyte, and the positive electrode active material may include at least one selected from the group consisting of an oxide active material, a sulfide active material, and a combination thereof, and the solid electrolyte may include one or more selected from the group consisting of an oxide-based solid electrolyte, a sulfide-based solid electrolyte, and a polymer electrolyte.

The positive electrode current collector may include at least one selected from the group consisting of magnesium, aluminum, stainless steel, iron, and combinations thereof.

According to the present invention, provided is a method for manufacturing an all-solid-state battery comprising steps of:preparing an admixture comprising a metal and a metal nitride;preparing a slurry comprising the admixture, a binder and a solvent;forming an intermediate layer by applying the slurry onto a substrate; and forming a structure in which a negative electrode current collector, the intermediate layer, a solid electrolyte layer, a positive electrode active material layer and a positive electrode current collector are sequentially laminated, wherein a mass ratio of the metal to the metal nitride is about 1:9 to 5:5, wherein the metal electrochemically reacts with lithium ions that have moved from the positive electrode active material layer to the intermediate layer through the solid electrolyte layer during charging of the all-solid-state battery, and wherein the metal nitride is a lithium ion transport medium.

The admixture may be prepared by dry-milling the metal and the metal nitride.

The slurry may include, based on the total weight of the admixture and the binder, an amount of about 90 wt% to 99 wt% of the admixture and 1 wt% to 10 wt% of the binder.

The intermediate layer may have a thickness of about 0.5 µm to 20 µm.

Further provided is a vehicle that includes all-solid electrolyte battery as described herein.

### BRIEF DESCRIPTION OF THE DRAWINGS

The above and other features of the present disclosure will now be described in detail with reference to certain exemplary examples thereof illustrated in the accompanying drawings which are given herein below by way of illustration only, and thus are not limitative of the present disclosure, and wherein:
FIG. 1 shows an exemplary all-solid-state battery according to the present disclosure;
FIG. 2 shows a state in which the all-solid-state battery according to an exemplary embodiment of the present disclosure is charged;
FIG. 3 shows the results of scanning electron microscopy-energy dispersive spectroscopy (SEM-EDS) of a admixture prepared in Preparation Example 1;
FIG. 4 shows the results of X-ray diffraction (XRD) analysis of the admixture prepared in Preparation Example 1;
FIG. 5 shows a scanning electron microscope (SEM) image of the surface of an intermediate layer obtained in Preparation Example 2;
FIG. 6A shows the results of measuring the characteristics of the first charge/discharge cycle of a half-cell according to Example 1;
FIG. 6B shows the results of measuring the characteristics of the 45^{th} charge/discharge cycle of the half-cell according to Example 1;
FIG. 7 shows the results of measuring the coulombic efficiency versus charge/discharge cycle number of the half-cell according to Example 1; and
FIG. 8 shows the results of evaluating the lifespan of a symmetric cell according to Example 2.

### DETAILED DESCRIPTION

The above objects, other objects, features and advantages of the present disclosure will become apparent with reference to the embodiments described below in conjunction with the accompanying drawings. However, the present disclosure is not limited to the embodiments disclosed below and may be embodied in a variety of different forms. Rather, these embodiments disclosed herein are provided so that this disclosure will be thorough and complete.

Throughout the specification and the accompanying drawings, like reference numerals refer to like components. In the accompanying drawings, the dimensions of structures are exaggerated for clarity of illustration. Although terms such as "first" and "second" may be used to describe various components, the components should not be limited by these terms. These terms are used only to distinguish one component from another component. For example, a first component may be termed a second component without departing from the scope of the present disclosure, and similarly, a second component may also be termed a first component. Singular expressions include plural expressions unless the context clearly indicates otherwise.

In the present specification, it should be understood that terms such as "include" and "have" are intended to denote the existence of mentioned characteristics, numbers, steps, operations, components, parts, or combinations thereof, but do not exclude the probability of existence or addition of one or more other characteristics, numbers, steps, operations, components, parts, or combinations thereof. In addition, when a part, such as a layer, film, region, plate, or the like, is referred to as being "on" or "above" another part, it not only refers to a case where the part is directly above the other part, but also a case where a third part exists therebetween. Conversely, when a part, such as a layer, film, region, plate, or the like, is referred to as being "below" another part, it not only refers to a case where the part is directly below the other part, but also a case where a third part exists therebetween.

Since all numbers, values and/or expressions referring to quantities of components, reaction conditions, polymer compositions, and admixtures used in the present specification are subject to various uncertainties of measurement encountered in obtaining such values, unless otherwise indicated, all are to be understood as modified in all instances by the term "about." Further, unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Where a numerical range is disclosed herein, such a range is continuous, inclusive of both the minimum and maximum values of the range as well as every value between such minimum and maximum values, unless otherwise indicated. Still further, where such a range refers to integers, every integer between the minimum and maximum values of such a range is included, unless otherwise indicated. In the present specification, when a range is described for a variable, it will be understood that the variable includes all values including the end points described within the stated range. For example, the range of "5 to 10" will be understood to include any subranges, such as 6 to 10, 7 to 10, 6 to 9, 7 to 9, and the like, as well as individual values of 5, 6, 7, 8, 9 and 10, and will also be understood to include any value between valid integers within the stated range, such as 5.5, 6.5, 7.5, 5.5 to 8.5, 6.5 to 9, and the like. Also, for example, the range of "10% to 30%" will be understood to include subranges, such as 10% to 15%, 12% to 18%, 20% to 30%, etc., as well as all integers including values of 10%, 11%, 12%, 13% and the like up to 30%, and will also be understood to include any value between valid integers within the stated range, such as 10.5%, 15.5%, 25.5%, and the like.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

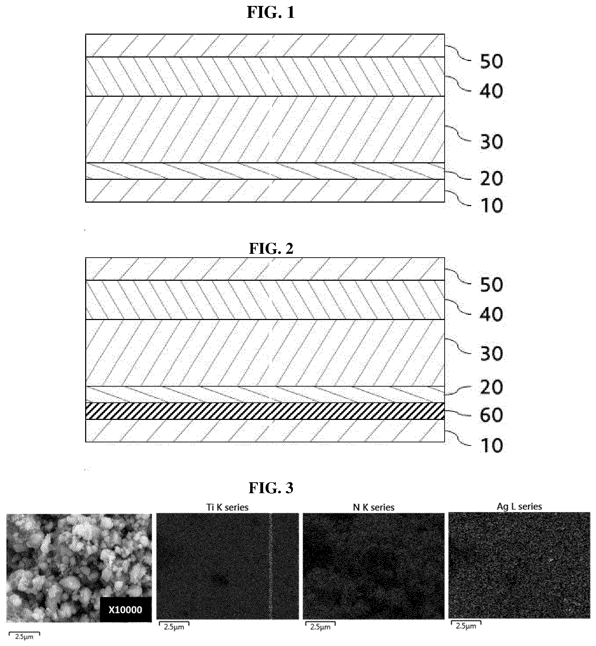

FIG. 1 shows an all-solid-state battery according to the present disclosure. As shown in FIG. 1, the all-solid-state battery may be a laminate including a negative electrode current collector 10, an intermediate layer 20, a solid electrolyte layer 30, a positive electrode active material layer 40, and a positive electrode current collector 50.

The negative electrode current collector 10 may be an electrically conductive plate-shaped substrate. Particularly, the negative electrode current collector 10 may be in the form of a sheet or a thin film.

The negative electrode current collector 10 may include a material that does not react with lithium. Particularly, the negative electrode current collector 10 may include one or more selected from the group consisting of nickel, stainless steel, titanium, cobalt, and iron.

The intermediate layer 20 may include a metal and a metal nitride.

The metal (M) electrochemically reacts with lithium ions that have moved from the positive electrode active material layer 40 to the intermediate layer 20 through the solid electrolyte layer 30 during charging of the all-solid-state battery, and this electrochemical reaction is as shown in the following Reaction Formula 1:

[Reaction Formula 1] M + Li⁺ → M-Li (alloy)

The metal forms an alloy with lithium and induces uniform deposition of the lithium.

Metals (Ag, Zn, Mg, Sn, etc.) that may alloy with lithium form an alloy phase of M-Li (LiₓM_{y}).

When a lithium negative electrode is used as a reference electrode, the voltage at which lithium ions react with electrons and deposit as lithium metal is 0 V. The metals have a relative voltage of about 0.1 V to 2.0 V when a lithium negative electrode is used as a reference electrode. A reaction in which lithium ions meet the metals to form an alloy is more dominant than a reaction in which lithium ions meet electrons and are converted into lithium metal. Thus, during charging, the reaction between lithium ions and the metal in the intermediate layer 20 including the metal occurs prior to the reaction in which lithium ions are deposited as lithium metal. Then, the M-Li alloy is sufficiently formed during the charging process, and this phenomenon has the effect of allowing lithium ions to disperse uniformly into the intermediate layer 20. When the intermediate layer 20 is not present, a site where lithium ions can react is only a two-dimensional planar current collector. Even in the current collector, the reaction does not occur in the entire region, but electrons are concentrated in a bent or bonded portion, so that the lithium metal grows locally.

In addition, the M-Li alloy may be very compatible with lithium ions. Since the M-Li alloy formed during the charging process is in a state in which lithium is excessive, the energy at which lithium is deposited can be lowered. The metal present in the intermediate layer 20 preferentially reacts with lithium ions at a voltage higher than the lithium deposition voltage. Thus, lithium ions may be uniformly distributed in the intermediate layer 20 in three dimensions.

The metal nitride may be a lithium ion transport medium. Particularly, the metal nitride may contain a nitrogen atom having an unshared electron pair, through which lithium ions can smoothly move within the intermediate layer 20.

FIG. 2 shows a state in which the all-solid-state battery according to the present disclosure is charged. For example, the all-solid-state battery may include a lithium layer 60 between the negative electrode current collector 10 and the intermediate layer 20.

In the all-solid-state battery, lithium ions move to the intermediate layer 20 through the solid electrolyte layer 30 at the initial stage of charging. The lithium ions move toward the negative electrode current collector 10 through the metal nitride, and in this process, the lithium ions react with the metal M to form an M-Li alloy between the negative electrode current collector 10 and the intermediate layer 20. When charging continues, lithium is uniformly deposited or precipitated around the M-Li alloy to form the lithium layer 60. During discharging of the all-solid-state battery, the opposite reaction occurs. That is, the all-solid-state battery can be reversibly charged and discharged.

The metal may be alloyed with lithium, and may include one or more selected from the group consisting of silver (Ag), zinc (Zn), magnesium (Mg), bismuth (Bi), and tin (Sn).

The metal nitride contains a nitrogen atom having an unshared electron pair, and may include one or more selected from the group consisting of titanium nitride (TiN), aluminum nitride (AlN), cobalt (II) nitride (Co₃N₂), magnesium nitride (Mg₃N₂), silicon nitride (Si₃N₄), zinc nitride (Zn₃N₂), niobium nitride (NbN), copper (I) nitride (Cu₃N), and tin nitride (SnN).

The mass ratio of the metal to the metal nitride may be about 1:9 to 5:5. When the mass ratio of the metal to the metal nitride is within the above range, lithium affinity and lithium ion conductivity of the intermediate layer 20 may be uniformly improved. Particularly, when the mass ratio of the metal included in the intermediate layer 20 may be about 1 or greater, lithium ions can be uniformly dispersed inside the intermediate layer 20.

The ratio (D₁/D₂) of the D50 particle size (D₁) of the metal nitride to the D50 particle size (D₂) of the metal may be about 0.2 to 0.5. As used herein, the term "D50 particle size" refers to the corresponding particle size when the cumulative particle size distribution percentage of the corresponding powder, measured by a particle size analyzer, reaches about 50%. When the D50 particle size ratio (D₁/D₂) is within the above range, the intermediate layer 20 may have a structure in which the metal is distributed in a matrix composed of the metal nitride, and this structure may be advantageous for uniform formation of the lithium layer 60.

The D50 particle size (D₁) of the metal nitride may be about 10 nm to 200 nm. The D50 particle size (D₂) of the metal may be about 30 nm to 1,000 nm. The D50 particle size (D₁) of the metal nitride may be appropriately adjusted to meet the above-described particle size ratio (D₁/D₂) based on the D50 particle size (D₂) of the metal. When the D50 particle size (D₂) of the metal is within the above range, the metal may react uniformly with lithium ions. In addition, when the D50 particle size (D₂) of the metal is greater than about 1,000 nm, the size of the gap generated at the interface with the solid electrolyte layer 30 may be excessively large.

The metal and the metal nitride may not be chemically bonded to each other. The metal and the metal nitride in the intermediate layer 20 may exist in a simply mixed state When If the metal and the metal nitride are chemically bonded to each other, it may be difficult for the metal to react with lithium ions, and movement of lithium ions by the metal nitride may be difficult.

The intermediate layer 20 may further include a binder. The type of the binder is not particularly limited, and any binder that does not react with the metal and the metal nitride may be used. Examples of the binder include polyvinylidene fluoride (PVDF), carboxymethyl cellulose (CMC), polyethylene oxide (PEO), polymethylmethacrylate (PMMA), and polytetrafluoroethylene (PTFE).

The intermediate layer 20 may include an amount of about 90 wt% to 99 wt% of the metal and the metal nitride and an amount of about1 wt% to 10 wt% of the binder, wt% are based on the total weight of the intermediate layer. Here, the content of the metal and the metal nitride means the sum of the contents of the two components. When the content of the binder is less than about 1 wt%, it may be difficult for the intermediate layer 20 to be applied onto the negative electrode current collector 10, and when the content of the binder is greater than about 10 wt%, the movement of lithium ions within the intermediate layer 20 may be hindered.

The intermediate layer 20 may have a thickness of about 0.5 µm to 20 µm. When the thickness of the intermediate layer 20 is less than about 0.5 µm, the gap between the solid electrolyte layer 30 and the negative electrode current collector 10 may not be completely filled, and when the thickness of the intermediate layer 20 is greater than about 20 µm, the energy density may be lowered.

The solid electrolyte layer 30 is positioned between the positive electrode active material layer 40 and the negative electrode current collector 10 and may be involved in the movement of lithium ions.

The solid electrolyte layer 30 may include a solid electrolyte having lithium ion conductivity.

The solid electrolyte may include one or more selected from the group consisting of an oxide-based solid electrolyte, a sulfide-based solid electrolyte, and a polymer electrolyte. However, it may be preferable to use a sulfide-based solid electrolyte having high lithium ion conductivity. Examples of the sulfide-based solid electrolyte include, but are not particularly limited to, Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S_{S}-LiI, Li₂S-B₂S₃, Li₂S-P₂S₃-ZₘSₙ (wherein m and n are positive numbers, and Z is one of Ge, Zn and Ga), Li₂S-GeS₂, Li₂S-SiS₂-Li₃PO₄, Li₂S-SiS₂-LiₓMO_{y} (wherein x and y are positive numbers, and M is one of P, Si, Ge, B, Al, Ga and In), Li₁₀GeP₂S₁₂, and the like.

Examples of the oxide-based solid electrolyte include perovskite-type LLTO (Li₃ₓLa_{2/3-x}TiO₃), phosphate-based NASICON-type LATP (Li₁₊ₓAlₓTi₂₋ₓ(PO₄)₃), and the like.

Examples of the polymer electrolyte include a gel polymer electrolyte, a solid polymer electrolyte, and the like.

The solid electrolyte layer 30 may further include a binder. Examples of the binder include butadiene rubber, nitrile butadiene rubber, hydrogenated nitrile butadiene rubber, polyvinylidene fluoride (PVDF), polytetrafluoroethylene (PTFE), carboxymethyl cellulose (CMC), and the like.

The positive electrode active material layer 40 is configured to reversibly absorb and release lithium ions. The positive electrode active material layer 40 may include a positive electrode active material, a solid electrolyte, a conductive material, a binder, and the like.

The positive electrode active material may be an oxide active material or a sulfide active material.

Examples of the oxide active material include: rock salt bed type active materials such as LiCoO₂, LiMnO₂, LiNiO₂, LiVO₂, and Li₁₊ₓNi_{1/3}Co_{1/3}Mn_{1/3}O₂; spinel type active materials such as LiMn₂O₄, and Li(Ni_{0.5}Mn_{1.5})O₄; inverse spinel type active materials such as LiNiVO₄, and LiCoVO₄; olivine type active materials such as LiFePO₄, LiMnPO₄, LiCoPO₄, and LiNiPO₄; silicon-containing active materials such as Li₂FeSiO₄, and Li₂MnSiO₄; rock salt bed type active materials such as LiNi_{0.8}Co_{(0.2-x)}AlₓO₂ (0 < x < 0.2) in which a part of the transition metal is substituted with a different metal; spinel type active materials Li₁₊ₓMn_{2-x-y}M_{y}O₄ (wherein M is at least one of Al, Mg, Co, Fe, Ni and Zn, and 0 < x+y < 2) in which a part of the transition metal is substituted with a different metal; and lithium titanates such as Li₄Ti₅O₁₂.

Examples of the sulfide active material include copper Chevrel, iron sulfide, cobalt sulfide, nickel sulfide, and the like.

The solid electrolyte may include one or more selected from the group consisting of an oxide-based solid electrolyte, a sulfide-based solid electrolyte, and a polymer electrolyte. However, it may be preferable to use a sulfide-based solid electrolyte having high lithium ion conductivity. Examples of the sulfide-based solid electrolyte include, but are not particularly limited to, Li₂S-P₂S₅, Li₂S-P₂S₃-LiI, Li₂S-P₂S₅-LiCl, Li₂S-P₂S₅-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₃-LiI, Li₂S-B₂S₃, Li₂S-P₂S₅-ZₘSₙ (wherein m and n are positive numbers, and Z is one of Ge, Zn and Ga), Li₂S-GeS₂, Li₂S-SiS₂-Li₃PO₄, Li₂S-SiS₂-LiₓMO_{y} (wherein x and y are positive numbers, and M is one of P, Si, Ge, B, Al, Ga and In), Li₁₀GeP₂S₁₂, and the like.

Examples of the oxide-based solid electrolyte include perovskite-type LLTO (Li₃ₓLa_{2/3-x}TiO₃), phosphate-based NASICON-type LATP (Li₁₊ₓAlₓTi₂₋ₓ(PO₄)₃), and the like.

Examples of the polymer electrolyte include a gel polymer electrolyte, a solid polymer electrolyte, and the like.

The conductive material may be carbon black, conducting graphite, ethylene black, graphene, or the like.

Examples of the binder include butadiene rubber (BR), nitrile butadiene rubber (NBR), hydrogenated nitrile butadiene rubber (HNBR), polyvinylidene difluoride (PVDF), polytetrafluoroethylene (PTFE), carboxymethylcellulose (CMC), and the like.

The positive electrode current collector 50 may be an electrically conductive plate-shaped substrate. Particularly, the positive electrode current collector 50 may be in the form of a sheet or a thin film.

The positive electrode current collector 50 may include at least one selected from the group consisting of indium, copper, magnesium, aluminum, stainless steel, iron, and combinations thereof.

A method for manufacturing an all-solid-state battery may include steps of: preparing an admixture including a metal and a metal nitride having an unshared electron pair; preparing a slurry including the admixture, a binder and a solvent; forming an intermediate layer by applying the slurry onto a substrate; and forming a structure in which the negative electrode current collector, the intermediate layer, the solid electrolyte layer, the positive electrode active material layer, and the positive electrode current collector are sequentially laminated.

Details regarding each component in the above manufacturing method have been described above, and thus description thereof will be omitted below.

The admixture may be prepared by dry-milling the metal and the metal nitride. The metal and the metal nitride may be uniformly mixed by dry milling so that the intermediate layer 20 can effectively perform its functions. For example, in the dry milling, the energy transferred to the metal and the metal nitride should be controlled such that the two components do not react together to form a chemical bond. The energy can be controlled in consideration of the rotation speed (RPM) of the dry milling, the content and density of the milled particles, time, and the like.

The slurry may be prepared by adding the admixture prepared as described above to the solvent together with the binder.

The slurry may contain, based on the total weight of the admixture and the binder excluding the solvent, an amount of about 90 wt% to 99 wt% of the admixture and an amount of about 1 wt% to 10 wt% of the binder, wherein the wt% are based on a total weight combining the admixture and the binder.

As the solvent, any solvent may be used as long as it can disperse the admixture and the binder. Examples of the solvent include water, acetone, ethanol, N-methyl pyrrolidone (NMP), dimethyl sulfoxide (DMSO), tetrahydrofuran (THF), and the like.

The slurry may be prepared by adding the admixture and the binder to the solvent, and then treating them in various ways so that they can be evenly dispersed in the solvent. For example, the treatment may be ultrasonic irradiation.

Conditions for the ultrasonic irradiation are not particularly limited, and the ultrasonic irradiation may be performed with an intensity that does not affect the admixture and the binder.

The order of adding the admixture and the binder is not particularly limited, and the admixture and the binder may be added at the same time or at different times.

The intermediate layer may be formed by applying the slurry onto the substrate.

The substrate may be the negative electrode current collector or release paper. Specifically, the slurry may be applied directly onto the negative electrode current collector to form the intermediate layer, or the slurry may be applied to the release paper to form the intermediate layer which is then transferred onto the negative electrode current collector.

Thereafter, a structure having the laminate structure shown in FIG. 1 may be formed. The method of forming the structure is not particularly limited, and for example, the structure may be formed by attaching a separately prepared solid electrolyte layer, positive electrode active material layer and positive electrode current collector to a unit including the negative electrode current collector and the intermediate layer.

### EXAMPLE

Hereinafter, embodiments of the present disclosure will be described in more detail through examples. The following examples are merely to help understand the present disclosure, and the scope of the present disclosure is not limited thereto.

### Preparation Example 1 - admixture Containing Metal and Metal Nitride

Silver (Ag) nanopowder was prepared as a metal. Titanium nitride (TiN) powder was prepared as a metal nitride. The metal and the metal nitride were added to the equipment at a mass ratio of 3:7 and dry-milled, thus preparing a admixture. In this case, the particle size ratio (D₁/D₂) of the metal nitride to the metal was about 0.33.

FIG. 3 shows the results of scanning electron microscopy-energy dispersive spectroscopy (SEM-EDS) of the admixture. As shown in FIG. 3, the silver (Ag) and the titanium nitride (TiN) were uniformly distributed.

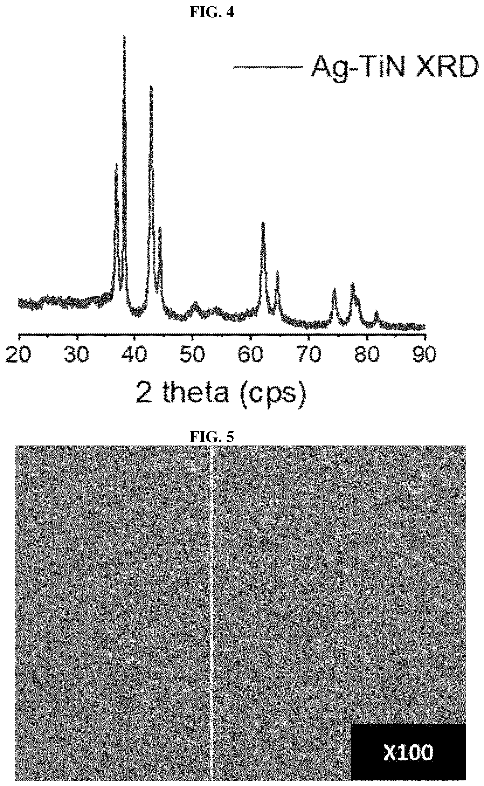

FIG. 4 shows the results of X-ray diffraction (XRD) analysis of the admixture and the crystal structures of the silver (Ag) and the titanium nitride (TiN) were in a mixed state, and no new crystal structure was not found in the dry milling process. As such, silver (Ag) and the titanium nitride (TiN) were in a simply mixed state without forming a chemical bond with each other.

### Preparation Example 2 - Intermediate Layer

95 wt% of the admixture prepared in Preparation Example 1 and 5 wt% of a binder were added to a solvent, based on the total weight combining the admixture and the binder, thus preparing a slurry. The binder was polyvinylidene fluoride (PVDF), and the solvent was N-methyl pyrrolidone (NMP).

The slurry was applied onto a negative electrode current collector and dried to form an intermediate layer. As the negative electrode current collector, one including stainless steel (SUS) was used.

FIG. 5 shows a scanning electron microscope (SEM) image of the surface of an exemplary intermediate layer according to an exemplary embodiment of the present disclosure.

### Example 1

A half-cell including the intermediate layer of Preparation Example 2 was fabricated and the charge/discharge characteristics thereof were evaluated. Specifically, the half-cell was fabricated by attaching a solid electrolyte layer onto the intermediate layer and attaching a lithium thin film onto the solid electrolyte layer, and then the charge/discharge characteristics thereof were measured under conditions of a temperature of about 25 °C, a current density of 1 mA/cm² and a deposition capacity of 3 mAh/cm².

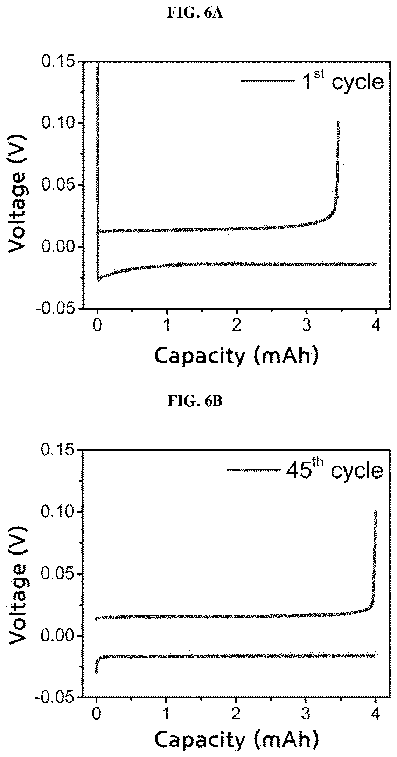

FIG. 6A shows the results of measuring the characteristics of the first charge/discharge cycle of the half-cell, and FIG. 6B shows the results of measuring the characteristics of the 45^{th} charge/discharge cycle of the half-cell. Referring thereto, lithium deposition was stably performed at - 0.02 V, and the initial efficiency was 86%. The initial irreversible capacity contributed to Ag-Li alloy formation. An efficiency close to 100% appeared at the 45^{th} cycle. That is, it can be seen that, when the intermediate layer according to the present disclosure is introduced, it is possible to realize an all-solid-state battery in which lithium may be deposited uniformly and deintercalated.

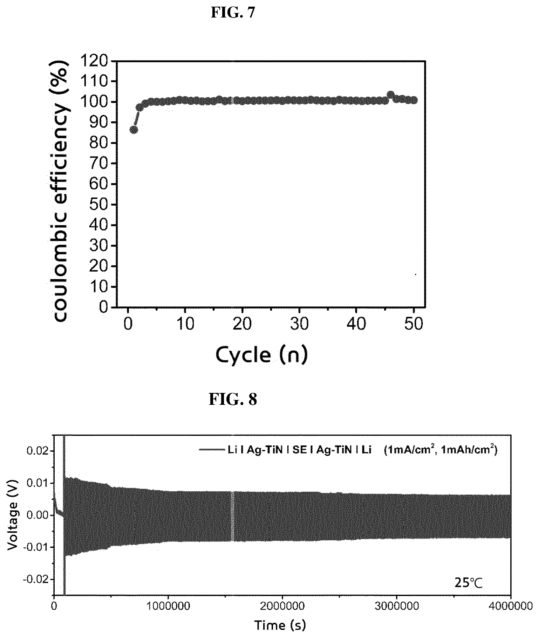

Meanwhile, FIG. 7 shows the results of measuring the coulombic efficiency versus charge/discharge cycle number of the half-cell. As shown in FIG. 7, the initial efficiency of the half-cell was 86%, and the average coulombic efficiency was close to 100% until 50 cycles. The coulombic efficiency of the half-cell means the lifespan of a fabricated full-cell.

The half-cell supplies an unlimited amount of lithium (Li), so that the reversibility of lithium absorption and release occurring in the intermediate layer 20 can be evaluated. The average coulombic efficiency of 100% means that the lithium metal formed on the negative electrode current collector 10 during charging is completely oxidized to lithium ions during discharging. Thus, higher average coulombic efficiency indicates less dead lithium and better reversibility.

### Example 2

A symmetric cell including the intermediate layer of Preparation Example 2 was fabricated and the lifespan thereof was evaluated. Specifically, the symmetric cell was fabricated by attaching the intermediate layer to both surfaces of a solid electrolyte layer and attaching a lithium thin film to the outside of the intermediate layer. The symmetric cell was charged and discharged under conditions of a current density of 1 mA/cm² and a deposition capacity of 1 mAh/cm². The results are shown in FIG. 8.

In a symmetrical cell having a laminate structure consisting of Li/solid electrolyte layer/Li without the intermediate layer, a short circuit occurs immediately during the initial charge/discharge cycle. On the other hand, as shown in FIG. 8, the symmetric cell according to Example 2 was stably driven for 18 hours or more.

According to various exemplary embodiments of the present disclosure, an all-solid-state battery in which lithium is uniformly deposited on the negative electrode current collector during charging may be provided.

The effects of the present disclosure are not limited to the above-mentioned effects. It should be understood that the effects of the present disclosure include all effects that can be deduced from the above description.

While the embodiments of the present disclosure have been described in detail, the scope of the present disclosure is not limited to the above-described embodiments, and various modifications and improvements made by those skilled in the art using the basic concept of the present disclosure as defined in the appended claims are also included in the scope of the present disclosure.

## Claims

1. An all-solid-state battery comprising:
a negative electrode current collector (10);
an intermediate layer (20) disposed on the negative electrode current collector (10);
a solid electrolyte layer (30) disposed on the intermediate layer (20);
a positive electrode active material layer (40) disposed on the solid electrolyte layer (30); and
a positive electrode current collector (50) disposed on the positive electrode active material layer (40), wherein the intermediate layer (20) comprises a metal and a metal nitride,
wherein a mass ratio of the metal to the metal nitride is about 1:9 to 5:5,
wherein the metal electrochemically reacts with lithium ions that have moved from the positive electrode active material layer (40) to the intermediate layer (20) through the solid electrolyte layer (30) during charging of the all-solid-state battery, and
wherein the metal nitride is a lithium ion transport medium.

2. The all-solid-state battery of claim 1, wherein the metal comprises one or more selected from the group consisting of silver (Ag), zinc (Zn), magnesium (Mg), bismuth (Bi), and tin (Sn).

3. The all-solid-state battery of claim 1, wherein the metal nitride comprises a nitrogen atom having an unshared electron pair.

4. The all-solid-state battery of claim 1, wherein the metal nitride comprises one or more selected from the group consisting of titanium nitride (TiN), aluminum nitride (AlN), cobalt (II) nitride (Co₃N₂), magnesium nitride (Mg₃N₂), silicon nitride (Si₃N₄), zinc nitride (Zn₃N₂), niobium nitride (NbN), copper (I) nitride (Cu₃N), and tin nitride (SnN).

5. The all-solid-state battery of claim 1, wherein the intermediate layer (20) comprises an amount of about 90 wt% to 99 wt% of the metal and the metal nitride; and an amount of about 1 wt% to 10 wt% of a binder, based on the total weight of the intermediate layer (20), and the intermediate layer (20) has a thickness of about 0.5 µm to 20 µm.

6. A method for manufacturing an all-solid-state battery comprising steps of:
preparing an admixture comprising a metal and a metal nitride;
preparing a slurry comprising the admixture, a binder and a solvent;
forming an intermediate layer (20) by applying the slurry onto a substrate; and
forming a structure in which a negative electrode current collector (10), the intermediate layer (20), a solid electrolyte layer (30), a positive electrode active material layer (40) and a positive electrode current collector (50) are sequentially laminated,
wherein a mass ratio of the metal to the metal nitride is about 1:9 to 5:5,
wherein the metal electrochemically reacts with lithium ions that have moved from the positive electrode active material layer (40) to the intermediate layer (20) through the solid electrolyte layer (30) during charging of the all-solid-state battery, and
wherein the metal nitride is a lithium ion transport medium.

7. The method of claim 6, wherein the metal comprises one or more selected from the group consisting of silver (Ag), zinc (Zn), magnesium (Mg), bismuth (Bi), and tin (Sn),
the metal nitride comprises a nitrogen atom having an unshared electron pair, and
the metal nitride comprises one or more selected from the group consisting of titanium nitride (TiN), aluminum nitride (AlN), cobalt (II) nitride (Co₃N₂), magnesium nitride (Mg₃N₂), silicon nitride (Si₃N₄), zinc nitride (Zn₃N₂), niobium nitride (NbN), copper (I) nitride (Cu₃N), and tin nitride (SnN).

8. The method of claim 6, wherein the admixture is prepared by dry-milling the metal and the metal nitride.

9. The method of claim 6, wherein the slurry comprises, based on the total weight of the admixture and the binder, an amount of about 90 wt% to 99 wt% of the admixture and an amount of about 1 wt% to 10 wt% of the binder, and
the intermediate layer has a thickness of about 0.5 µm to 20 µm.

## Patentansprüche

1. Festkörperbatterie, umfassend:
einen Negativelektroden-Stromkollektor (10);
eine Zwischenschicht (20), angeordnet auf dem Negativelektroden-Stromkollektor (10);
eine Festelektrolytschicht (30), angeordnet auf der Zwischenschicht (20),
eine Positivelektroden-Aktivmaterialschicht (40), angeordnet auf der Festelektrolytschicht (30); und
einen Positivelektroden-Stromkollektor (50), angeordnet auf der Positivelektroden-Aktivmaterialschicht (40), wobei die Zwischenschicht (20) ein Metall und ein Metallnitrid umfasst,
wobei ein Massenverhältnis des Metalls zu dem Metallnitrid etwa 1:9 bis 5:5 beträgt,
wobei das Metall mit Lithium-Ionen, die durch die Festelektrolytschicht (30) von der Positivelektroden-Aktivmaterialschicht (40) zu der Zwischenschicht (20) gewandert sind, während des Ladens der Festkörperbatterie elektrochemisch reagiert, und
wobei das Metallnitrid ein Medium für den Lithium-Ionen-Transport ist.

2. Festkörperbatterie nach Anspruch 1, wobei das Metall eines oder mehrere, ausgewählt aus der Gruppe bestehend aus Silber (Ag), Zink (Zn), Magnesium (Mg), Bismut (Bi) und Zinn (Sn), umfasst.

3. Festkörperbatterie nach Anspruch 1, wobei das Metallnitrid ein Stickstoffatom mit einem freien Elektronenpaar umfasst.

4. Festkörperbatterie nach Anspruch 1, wobei das Metallnitrid eines oder mehrere, ausgewählt aus der Gruppe bestehend aus Titannitrid (TiN), Aluminiumnitrid (AlN), Cobalt(II)-nitrid (Co₃N₂), Magnesiumnitrid (Mg₃N₂), Siliciumnitrid (Si₃N₄), Zinknitrid (Zn₃N₂), Niobnitrid (NbN), Kupfer(I)-nitrid (Cu₃N) und Zinnnitrid (SnN), umfasst.

5. Festkörperbatterie nach Anspruch 1, wobei die Zwischenschicht (20) eine Menge von etwa 90 Gew.-% bis 99 Gew.-% des Metalls und des Metallnitrids; und eine Menge von etwa 1 Gew.-% bis 10 Gew.-% eines Bindemittels, bezogen auf das Gesamtgewicht der Zwischenschicht (20), umfasst, und
die Zwischenschicht (20) eine Dicke von etwa 0,5 µm bis 20 µm aufweist.

6. Verfahren zur Herstellung einer Festkörperbatterie, umfassend die folgenden Schritte:
Herstellen eine ein Metall und ein Metallnitrid umfassende Beimischung;
Herstellen einer die Beimischung, ein Bindemittel und ein Lösungsmittel umfassenden Aufschlämmung;
Bilden einer Zwischenschicht (20) durch Aufbringen der Aufschlämmung auf ein Substrat; und
Ausbilden einer Struktur, bei der ein Negativelektroden-Stromkollektor (10), die Zwischenschicht (20), eine Festelektrolytschicht (30), eine Positivelektroden-Aktivmaterialschicht (40) und ein Positivelektroden-Stromkollektor (50) der Reihe nach geschichtet werden,
wobei ein Massenverhältnis des Metalls zu dem Metallnitrid etwa 1:9 bis 5:5 beträgt,
wobei das Metall mit Lithium-Ionen, die durch die Festelektrolytschicht (30) von der Positivelektroden-Aktivmaterialschicht (40) zu der Zwischenschicht (20) gewandert sind, während des Ladens der Festkörperbatterie elektrochemisch reagiert, und
wobei das Metallnitrid ein Medium für den Lithium-Ionen-Transport ist.

7. Verfahren nach Anspruch 6, wobei das Metall eines oder mehrere, ausgewählt aus der Gruppe bestehend aus Silber (Ag), Zink (Zn), Magnesium (Mg), Bismut (Bi) und Zinn (Sn), umfasst,
das Metallnitrid ein Stickstoffatom mit einem freien Elektronenpaar umfasst, und
das Metallnitrid eines oder mehrere, ausgewählt aus der Gruppe bestehend aus Titannitrid (TiN), Aluminiumnitrid (AlN), Cobalt(II)-nitrid (Co₃N₂), Magnesiumnitrid (Mg₃N₂), Siliciumnitrid (Si₃N₄), Zinknitrid (Zn₃N₂), Niobnitrid (NbN), Kupfer(I)-nitrid (Cu₃N) und Zinnnitrid (SnN), umfasst.

8. Verfahren nach Anspruch 6, wobei die Beimischung durch Trockenmahlen des Metalls und des Metallnitrids hergestellt wird.

9. Verfahren nach Anspruch 6, wobei die Aufschlämmung, bezogen auf das Gesamtgewicht der Beimischung und des Bindemittels, eine Menge von etwa 90 Gew.-% bis 99 Gew.-% der Beimischung und eine Menge von etwa 1 Gew.-% bis 10 Gew.-% des Bindemittels umfasst, und
die Zwischenschicht eine Dicke von etwa 0,5 µm bis 20 µm aufweist.

## Revendications

1. Batterie tout solide comprenant :
un collecteur de courant d'électrode négative (10) ;
une couche intermédiaire (20) disposée sur le collecteur de courant d'électrode négative (10) ;
une couche d'électrolyte solide (30) disposée sur la couche intermédiaire (20) ;
une couche de matière active d'électrode positive (40) disposée sur la couche d'électrolyte solide (30) ; et
un collecteur de courant d'électrode positive (50) disposé sur la couche de matière active d'électrode positive (40), dans laquelle la couche intermédiaire (20) comprend un métal et un nitrure métallique,
dans laquelle un rapport des masses du métal sur le nitrure métallique est d'environ 1 : 9 à 5 : 5,
dans laquelle le métal réagit électrochimiquement avec des ions lithium qui se sont déplacés à partir de la couche de matière active d'électrode positive (40) vers la couche intermédiaire (20) à travers la couche d'électrolyte solide (30) pendant la charge de la batterie tout solide, et
dans laquelle le nitrure métallique est un milieu de transport d'ions lithium.

2. Batterie tout solide selon la revendication 1, dans laquelle le métal comprend un ou plusieurs choisis dans le groupe constitué de l'argent (Ag), du zinc (Zn), du magnésium (Mg), du bismuth (Bi), et de l'étain (Sn).

3. Batterie tout solide selon la revendication 1, dans laquelle le nitrure métallique comprend un atome d'azote ayant une paire d'électrons non partagée.

4. Batterie tout solide selon la revendication 1, dans laquelle le nitrure métallique comprend un ou plusieurs choisis dans le groupe constitué du nitrure de titane (TiN), du nitrure d'aluminium (AIN), du nitrure de cobalt (II) (Co₃N₂), du nitrure de magnésium (Mg₃N₂), du nitrure de silicium (Si₃N₄), du nitrure de zinc (Zn₃N₂), du nitrure de niobium (NbN), du nitrure de cuivre (I) (CU₃N), et du nitrure d'étain (SnN).

5. Batterie tout solide selon la revendication 1, dans laquelle la couche intermédiaire (20) comprend une quantité d'environ 90 % en poids à 99 % en poids de métal et de nitrure métallique ; et une quantité d'environ 1 % en poids à 10 % en poids de liant, sur la base du poids total de la couche intermédiaire (20), et
la couche intermédiaire (20) a une épaisseur d'environ 0,5 µm à 20 µm.

6. Procédé de fabrication d'une batterie tout solide comprenant les étapes de :
préparation d'un adjuvant comprenant un métal et un nitrure métallique ; préparation d'une bouillie comprenant l'adjuvant, un liant, et un solvant ;
formation d'une couche intermédiaire (20) en appliquant la bouillie sur un substrat ; et
formation d'une structure dans laquelle un collecteur de courant d'électrode négative (10), la couche intermédiaire (20), une couche d'électrolyte solide (30), une couche de matière active d'électrode positive (40), et un collecteur de courant d'électrode positive (50) sont stratifiés séquentiellement,
dans lequel un rapport des masses de métal sur le nitrure métallique est d'environ 1 : 9 à 5 : 5,
dans lequel le métal réagit électrochimiquement avec des ions lithium qui se sont déplacés de la couche de matière active d'électrode positive (40) vers la couche intermédiaire (20) à travers la couche d'électrolyte solide (30) durant la charge de la batterie tout solide et
dans lequel le nitrure métallique est un milieu de transport d'ions lithium.

7. Procédé selon la revendication 6, dans lequel le métal comprend un ou plusieurs choisis dans le groupe constitué de l'argent (Ag), du zinc (Zn), du magnésium (Mg), du bismuth (Bi), et de l'étain (Sn),
le nitrure métallique comprend un atome d'azote ayant une paire d'électrons non partagée, et
le nitrure métallique comprend un ou plusieurs choisis dans le groupe constitué du nitrure de titane (TiN), du nitrure d'aluminium (AIN), du nitrure de cobalt (II) (Co₃N₂), du nitrure de magnésium (Mg₃N₂), du nitrure de silicium (Si₃N₄), du nitrure de zinc (Zn₃N₂), du nitrure de niobium (NbN), du nitrure de cuivre (I) (Cu₃N), et du nitrure d'étain (SnN).

8. Procédé selon la revendication 6, dans lequel l'adjuvant est préparé par broyage à sec du métal et du nitrure métallique.

9. Procédé selon la revendication 6, dans lequel la bouillie comprend, sur la base du poids total de l'adjuvant et du liant, une quantité d'environ 90 % en poids à 99 % en poids d'adjuvant et une quantité d'environ 1 % en poids à 10 % en poids de liant, et
la couche intermédiaire a une épaisseur d'environ 0,5 µm à 20 µm.
